# EUROPÄISCHE PATENTSCHRIFT

(11) **EP 1 903 852 B1**
(45) Veröffentlichungstag und Bekanntmachung des Hinweises auf die Patenterteilung: **08.07.2015**
(21) Anmeldenummer: 06762557.4
(22) Anmeldetag: 12.07.2006
(51) Int. Cl.: A01G 3/00, A01D 34/49, A01D 34/43, A01D 43/063

(54) **ZERKLEINERUNGSVORRICHTUNG MIT ZUMINDEST EINEM ROTOR UND ZUMINDEST EINER GEGENSCHNEIDE ZUR ZERKLEINERUNG VON ORGANISCHEN MATERIALIEN**
COMMINUTION DEVICE COMPRISING AT LEAST ONE ROTOR AND AT LEAST ONE COUNTER-BLADE FOR THE COMMINUTION OF ORGANIC MATERIALS
DISPOSITIF DE BROYAGE COMPRENANT AU MOINS UN ROTOR ET AU MOINS UNE LAME ANTAGONISTE, UTILISE POUR BROYER DES MATIERES ORGANIQUES

(30) Priorität: 20.07.2005 DE 102005034491
(43) Veröffentlichungstag der Anmeldung: 02.04.2008
(73) Patentinhaber: AHWI Maschinenbau Gmbh, 88634 Herdwangen (DE)
(72) Erfinder: WILLIBALD, Artur, 88634 Herdwangen (DE)
(74) Vertreter: Daub, Thomas
(86) Internationale Anmeldenummer: PCT/EP2006/006823
(87) Internationale Veröffentlichungsnummer: WO 2007/009648

(56) Entgegenhaltungen:
- EP-A- 0 063 259
- EP-A- 1 557 081
- EP-A1- 1 106 058
- CA-A1- 1 136 520
- DE-A1- 3 013 544
- US-A- 2 836 023

## Beschreibung

Die vorliegende Erfindung betrifft eine Zerkleinerungsvorrichtung mit einem Rotor und zumindest einer Gegenschneide zur Zerkleinerung von organischen Materialien, Böden, pflanzlichen Kulturen oder dergleichen.

Bei herkömmlichen Zerkleinerungsvorrichtung ist nachteilig, dass diese zwar einen Boden zerkleinern, jedoch das zerkleinernde Material am Boden verbleibt.

Eine entsprechende Ausmagerung von Kulturen sowie eine Biomassengewinnung ist mit herkömmlichen Zerkleinerungsvorrichtung nicht möglich.

Zudem wird das zerkleinerte organische Material nicht gründlich zerkleinert und verbleibt am Boden. Dies ist bei bestimmten Kulturen unerwünscht, da das zerkleinerte Material von Schädlingen befallen wird, die auch neu heranwachsende Kulturen wieder beschädigen können.

Andererseits ist häufig zerkleinertes organisches Material von hochkalorischem Wert und kann der Wiederverwertung, einer Verbrennung, einer Weiterverarbeitung zu Pellets, Briketts etc. weiter verarbeitet werden. Hierzu ist es erforderlich, dass eine möglichst gründliche Zerkleinerung des organischen Materials erfolgt, so dass wenig zu zerkleinerndes Material am Boden verbleibt und die Ausbeute an organisch verwertbaren zerkleinertem Materialien optimiert ist. Dies ist bei herkömmlichen Zerkleinerungsvorrichtungen nicht der Fall.

Die DE 30 13 544 A1 offenbart einen Graslader, zum Anbau an ein Mähgerät, bei welchem getrocknetes Heu gemäht wird und anschliessend aufgenommen und mit einem Gebläse abtransportiert wird.

Die EP 1 106 058 A1 sowie die EP 1 557 081 A1 betreffen eine Holzerntemaschine und einen Schredder, bei welchen ein Aufnahmerotor für das zu zerkleinernde Material vorgesehen ist, welchem dann ein Zerkleinerungsrotor nachgeschaltet ist. Von diesem wird dann das zerkleinerte Material mittels einer Fördereinrichtung abtransportiert.

Die EP 0 063 259 A1 offenbart ein Schlegelmulchgerät, bei welchem über einen Rotor das zerkleinerte Material aufgenommen.und zerkleinert wird und anschliessend nach oben über eine oberhalb des Rotors liegende Fördereinrichtung als Transportband oder Gebläse in ein Aufnahmesack ausgetragen wird. Die US 2,836,023 A1 offenbart eine Holzerntemaschine, bei welcher Büsche od. dgl. oberhalb eines Bodens mittels eines Rotors aufgenommen und zerkleinert werden und dann einer Doppelförderschnecke übergeben werden, die das Material zum weiteren Ausbringen aus einem Gebläse bündelt.

Die CA 1 136 520 offenbart eine Holzrodungsmaschine, bei welcher das Gehölz von einem ersten Rotor vorzerkleinert und dann einem Transportband übergeben und einer Feinzerkleinerung zugeführt wird. Nach der Feinzerkleinerung wird dann mittels eines Gebläses die zerkleinerte Fraktion ausgetragen.

Der vorliegenden Erfindung liegt die Aufgabe zugrunde eine Zerkleinerungsvorrichtung der eingangs genannten Art zu schaffen, welche die genannten Nachteile beseitigt, und mit welcher auf einfache und kostengünstige Weise in einem Arbeitsgang organisches Material vom Boden aufgenommen, zerkleinert und abtransportiert werden soll.

Zudem soll die Zerkleinerung und Aufnahme des zerkleinerten organischen Materials optimiert werden, so dass lediglich in einem Arbeitsgang eine Zerkleinerung und Befreiung von organischem Materialien möglich ist.

Zur Lösung dieser Aufgabe führt, dass mittels eines Rotors das organische Material zerkleinerbar und einer Auffangeinrichtung zuführbar ist, wobei der Rotor, insbesondere als Zerkleinerungsrotor ausgebildet ist, und durch seine Drehrichtung zur Fahrtrichtung materialaufnehmend angetrieben ist, wobei das Gehäuse das zerkleinerte organische Material in eine Auffangeinrichtung umlenkt bzw. übergibt, welche zumindest eine Fördereinrichtung aufweist, die dem kontinuierlichen oder diskontinuierlichen Abtransport von zerkleinertem organischen Material dient, und Zerkleinerungsrotor und die Auffangeinrichtung mit integrierter Fördereinrichtung in wobei diese über einen gemeinsamen Zuführkanal verbunden sind, wobei die Fördereinrichtung (10) an den Rotor als Querfördereinrichtung (17) anschliesst, die ein Schaufelrad (18) und einen Querförderer (20) als Förderschnecke oder als zweites Schaufelrad (18) in einer Ebene aufweist, eine Drehachse des Schaufelrades (18) bzw des Schaufelrädes (18) in etwa lotrecht zur Rotorachse (A_{R}) ausgerichtet ist und das Schaufelrad (18) und der Querförderer (20) bzw. das zweite Schaufelrad in einer zur Drehachse (D) senkrechten Ebene angeordnet sind.

Bei der vorliegenden Erfindung hat sich als besonders vorteilhaft erwiesen, eine Zerkleinerungsvorrichtung zu schaffen, die an ein beliebiges Zug- oder Schubfahrzeug wie Traktor, Mulcher, Bodenbearbeitungsgerät oder dergleichen anschliessbar ist. Dabei wird ein Rotor, beispielsweise angetrieben über Zapfwellen, eigene Antriebseinrichtungen, Hydraulik, Servomotoren, Zahnriemen etc. entgegen einer Fahrtrichtung angetrieben, wobei der Rotor als Zerkleinerungsrotor, Stufenrotor etc. ausgebildet sein kann und eine Mehrzahl von gleichen oder unterschiedlichen Zerkleinerungswerkzeuge aufweist, die mit entsprechenden Gegenschneiden, welche in einem Gehäuse der Zerkleinerungsvorrichtung angeordnet sind, zusammenwirken.

Dabei dreht der Rotor in seiner Drehrichtung im Bereich des Bodens entsprechend der Fahrtrichtung X und nimmt hierdurch das zu zerkleinernde Material über einen Zerkleinerungsspalt auf, zerkleinert organisches Material im Zerkleinerungsspalt, zwischen Gehäuse und dem Rotorelement und führt dann das zerkleinerte organische Material direkt einer dem Rotor nachgeschalteten Auffangeinrichtung mit integrierter Fördereinrichtung zu. Mittels der Fördereinrichtung, die als Spindel, Transportband, Förderschnecke, od. dgl. ausgebildet sein kann, wird das zerkleinerte organische Material aus der Zerkleinerungsvorrichtung ausgetragen, ggfs. mittels einer Übergabeeinheit dann einem Aufnahmefahrzeug für organisches Material übergeben.

Von Vorteil bei der vorliegenden Erfindung ist auch, dass durch die Anordnung des Rotors, des Gehäuses und der Auffangeinrichtung innerhalb des Zerkleinerungsspaltes eine möglichtst lange Zerkleinerungsstrecke zur vollständigen Zerkleinerung des organischen Materials geschaffen wird und unmittelbar nach der Zerkleinerung über einen Zuführkanal das zerkleinerte organische Material der Auffangeinrichtung zuführen.

Dabei kann die Auffangeinrichtung wannenartig geöffnet oder geschlossen sein, um dass zerkleinerte Material aufzunehmen und weiter zu transportieren.

Dabei soll auch daran gedacht sein, dass die Auffangeinrichtung mit entsprechenden siebartigen Lochungen versehen ist, um bspw. feine Erde oder Bodenmaterial wieder auf den Boden auszubringen bzw. das organische Material von Bodenmaterial weitgehenst zu befreien.

Von Vorteil bei der vorliegenden Erfindung ist ferner, dass in einem Arbeitsgang mittels des Rotors das organische Material zerkleinert wird, durch die Bewegung des Rotors in Fahrtrichtung am Boden betrachtet, nicht nur ein Aufnehmen, sondern auch ein schnelles Zerkleinern und Zuführen von organischem Material in den Zerkleinerungsspalt gewährleistet wird, im Spalt entsprechend eine Zerkleinerung des organischen Materials erfolgt und dann das zerkleinerte Material unmittelbar einer Auffangeinrichtung mit integrierter Fördereinrichtung zum Weitertransport weitergegeben wird.

Dabei wird das zerkleinerte organische Material über hier nur angedeutete Prallbleche oder dergleichen umgelegt bzw. niedergedrückt und vom Rotor aufgenommen und dem Zerkleinerungsspalt zugeführt..

Bei der Zerkleinerungsvorrichtung gemäss der vorliegenden Erfindung ist dem Rotor eine Querfördereinrichtung nachgeschaltet, die als Schaufelrad ausgebildet ist. Die Drehachse des Schaufelrades ist bevorzugt lotrecht zur Rotorachse des Rotors ausgerichtet. Das Schaufelrad sitzt in einem Gehäuse, welches mit dem Gehäuse des Rotors verbunden ist, um das zerkleinerte Material seitlich auszutragen.

Dabei können mehrere einzelne radial nebeneinander angeordnete Schaufelräder als Querförderer angeordnet sein, um in die eine und/oder andere Richtung zerkleinertes Material, welches radial vom Rotor übergeben wurde, auszutragen.

Ein zusätzlicher Querförderer in Form eines Schaufelrades, einer Förderschnecke, eines Förderbands od. dgl. führt dem Schaufelrad zerkleinertes Material zum seitlich Austragen zu.

Weitere Vorteile, Merkmale und Einzelheiten der Erfindung ergeben sich aus der nachfolgenden Beschreibung bevorzugter Ausführungsbeispiele sowie anhand der Zeichnung; die Figuren 1 bis 4 verdeutlichen dabei nur Hintergrundwissen, die dort gezeigten Ausführungsbeispiele gehören nicht zur Erfindung:
Figur 1 eine schematisch dargestellte Seitenansicht auf eine Zerkleinerungsvorrichtung;
Figur 2 eine schematisch dargestellte Draufsicht auf die Zerkleinerungsvorrichtung gemäss Figur 1 mit mehreren möglichen Übergabeeinheiten;
Figur 3 eine schematisch dargestellte Seitenansicht auf ein weiteres Ausführungsbeispiel einer Zerkleinerungsvorrichtung gemäss Figur 1;
Figur 4 eine schematisch dargestellte Seitenansicht auf ein weiteres Ausführungsbeispiel einer Zerkleinerungsvorrichtung gemäss Figur 1;
Figur 5a eine schematisch dargestellte Draufsicht auf ein erfindungsgemäßes Ausführungsbeispiel einer Zerkleinerungsvorrichtung gemäss Figur 1;
Figur 5b eine schematisch dargestellte Vorderansicht auf den Bereich einer Querfördereinrichtung der Zerkleinerungsvorrichtung gemäss Figur 5a;
Figur 5c eine schematisch dargestellte Seitenansicht auf die Zerkleinerungsvorrichtung gemäss Figur 5a;
Figur 6 eine schematisch dargestellte Draufsicht auf ein weiteres erfindungsgemäßes Ausführungsbeispiel der Zerkleinerungsvorrichtung gemäss Figur 5a Ausführungsbeispiel.

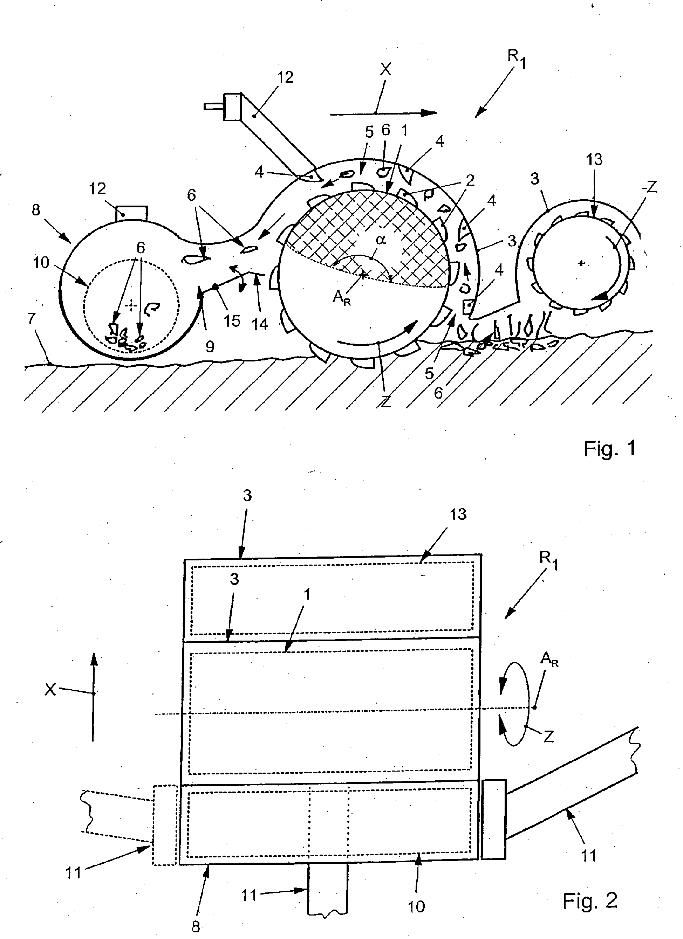

Gemäss Figur 1 weist eine Zerkleinerungsvorrichtung R₁ einen Rotor 1 auf, der vorzugsweise als Zerkleinerungsrotor ausgebildet ist, und eine Mehrzahl von hier nicht näher dargestellten Zerkleinerungswerkzeuge 2 aufweist.

Um eine Rotorachse A_{R} wird der Rotor 1 beispielsweise über Umlenkgetriebe, Zapfwellen, Zahnriemen od. dgl. von einem Fahrzeug oder einem integriertem Antrieb angetrieben.

Dabei ist der Rotor 1 um die Rotorachse A_{R} in einer Drehrichtung Z angetrieben, die am Boden betrachtet gleichläufig ist, zu einer Fahrtrichtung der Zerkleinerungsvorrichtung R₁.

Der Rotor 1 ist zumindest teilweise mittels eines Gehäuses 3 umfangen, wobei im inneren Teil des Gehäuses 3 eine oder eine Mehrzahl von Gegenschneiden 4 vorgesehen sind, die mit den Zerkleinerungswerkzeugen 2 des Rotors 1 zusammenwirken.

Durch die Drehrichtung Z des Rotors 1, betrachtet am Boden 7, mit der Fahrtrichtung X, wird das zu zerkleinernde organische Material, wie Äste, Böden, pflanzliche Kulturen od. dgl. vom Rotor 1 und dessen Zerkleinerungswerkzeuge 2 aufgenommen und in einem Zerkleinerungsspalt 5 zwischen Rotor 1 und Gehäuse 3 zur Zerkleinerung an den Gegenschneiden 4 transportiert.

Ferner hat sich als vorteilhaft erwiesen, den Rotor 1 mit gegenläufiger Drehrichtung Z zur Fahrtrichtung X über ein Zugfahrzeug, Traktor od. dgl. zu bewegen, um organisches Material 6 im Zerkleinerungsspalt 5 zu zerkleinern.

Damit das zerkleinerte organische Material 6, die pflanzlichen Kulturen, zerkleinerten Äste, gehexelte organische Stoffe nicht auf dem Boden 7 nach der Zerkleinerung verbleiben, schliesst bei der vorliegenden Erfindung unmittelbar an den Rotor 1, insbesondere unmittelbar an das Gehäuse 3 entgegen der Fahrtrichtung X eine Auffangeinrichtung 8 an.

Dabei ist zwischen dem Spalt 5 des Gehäuses 3 und der Auffangeinrichtung 8 ein Zuführkanal 9 gebildet, welcher das zerkleinerte Material 9 in die Auffangeinrichtung 8 befördert bzw. umleitet.

Bevorzugt geht das Gehäuse 3, welches im wesentlichen die Gegenschneiden 4 aufnimmt und den Rotor 1 nach aussen hin abdeckt, in die Auffangeinrichtung 8 über.

In der Auffangeinrichtung 8 ist eine Fördereinrichtung 10 integriert eingesetzt, die dem Abtransport des zerkleinerten organischen Materials 6 dient.

Die Fördereinrichtung 10 ist als Querfördereinrichtung ausgebildet, wie beispielsweise als Spindel, Transportband, Gebläse od. dgl..

Auf diese Weise lässt sich beispielsweise zerkleinertes organisches Material 6, welches nicht wieder auf den Boden 7 zurückgeführt werden soll, aufsammeln und über die Fördereinrichtung 10 wie es in Figur 2 dargestellt ist, beispielsweise stirnseitig an eine Übergabeeinheit 11 austragen. Die Übergabeeinheit 11 kann als Transportband, Transporteinheit, Gebläse, Spindel, Schnecke od. dgl. ausgebildet sein, um das zerkleinerte organische Material 6 aus der Auffangeinrichtung 8 über die Fördereinrichtung 10 an die Übergabeeinheit 11 zuzuführen, die bspw. mit einem separaten Behälter, Fahrzeug od. dgl. in Verbindung steht.

Dabei soll im Rahmen der vorliegenden Erfindung liegen, dass die Übergabeeinheit stirnseitig einerseits und andererseits an die Fördereinrichtung 10 anschliesst, um beispielsweise dem Zugfahrzeug, mit entsprechender Ladefläche und Aufnahmemöglichkeit für zerkleinertes Material direkt das zerkleinerte organische Material 6 zuzuführen.

Dabei kann die Zerkleinerungsvorrichtung R₁ wie es in Figur 1 angedeutet ist, über entsprechende Halteelemente 12 mit einem Zug- oder Schubfahrzeug, Traktor, Mulcher etc. verbunden und über Zapfwellen, Umlenkwellen od. dgl. angetrieben werden.

Ferner ist von Vorteil bei der vorliegenden Erfindung, dass bei einer waagerechten Anordnung von Rotor 1 und Auffangeinrichtung 8 hintereinander, das Gehäuse 3, insbesondere der Rotor 1 im Bereich eines Winkels α von etwa 90° bis 220° eine lange Zerkleinerungsstrecke im Bereich des Umfanges des Rotors 1 bzw. der inneren Mantelfläche des Gehäuses 3 schafft, um eine möglichst gründliche Zerkleinerung des organischen Materials 6 zuzulassen.

Hierdurch ist eine Zerkleinerungsstrecke im Zerkleinerungsspalt 5 vergrössert um eine Feinzerkleinerung von organischem Material zu gewährleisten.

Ferner kann dem Rotor 1 zu einer Vorzerkleinerung ein weiterer Rotor 13, drehbar, ebenfalls um eine Rotorachse A_{R} vorgeschaltet sein, um bspw. grösseres organisches Material, Büsche, Sträucher od. dgl. vorzuzerkleinern und dem Rotor 1 vorzerkleinert zuzuführen.

Dabei hat sich als vorteilhaft erwiesen, dass, sollte der Rotor 13 dem Rotor 1 vorgeschaltet sein, sich in einer entgegengesetzten Drehrichtung -Z bewegt bzw. angetrieben ist, die dem Rotor 1 gegenläufig ist.

Auf den Rotor 13 kann jedoch auch bei niedrigeren Kulturen ggfs. verzichtet werden. Hierauf sei die Erfindung nicht beschränkt. Daher ist der zusätzliche vorgeschaltete Rotor 13, wie er in Figur 2 lediglich gestrichelt angedeutet ist optional dem Rotor 1 vorschaltbar bzw. vorsetzbar. Wie ferner aus Figur 1 ersichtlich ist, kann zwischen der Auffangeinrichtung 8 und dem Rotor 1 ein Klappenelement 14 vorgesehen sein, welches um ein Gelenk 15 schwenkbar ist, um bspw. im Betrieb das zerkleinerte organische Material 6 auf den Boden 7 umzuleiten oder ggfs. bei Überfüllung eine Umleitung zu gewährleisten. Das Klappenelement 14 kann auch manuell oder automatisch im Betrieb geöffnet werden zu Wartungszwecken, Reinigungszwecken, Entleerungszwecken od. dgl..

Ferner hat sich bei der vorliegenden Erfindung als vorteilhaft erwiesen, dass die Auffangeinrichtung 8 wannenartig ggfs. nach oben geöffnet ausgebildet sein kann, um dort das zerkleinerte organische Material 6 aufzufangen.

Dabei soll auch im Rahmen der vorliegenden Erfindung liegen, dass die Auffangeinrichtung 8, insbesondere die wannenartige Auffangeinrichtung 8 siebartig mit entsprechenden Lochungen versehen sein kann, um das organische Material noch von Bodenresten, Bodenpartikeln zu befreien, die dann über die Lochungen bzw. siebartige

Ausgestaltung der Auffangeinrichtung 8 direkt über den Boden 7 wieder ausgebracht werden können.

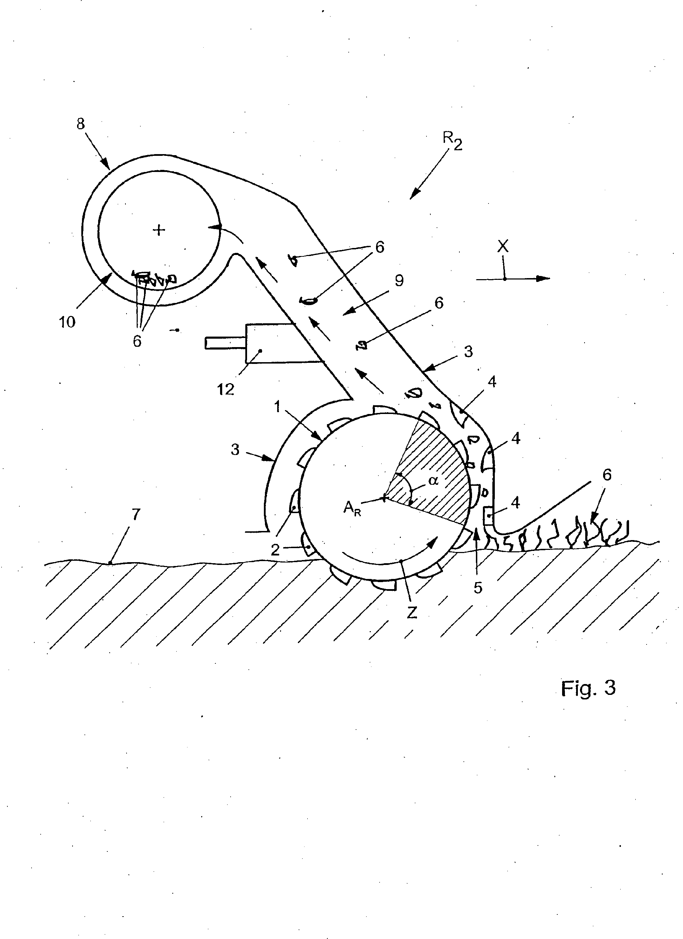

In einem anderen nicht erfindungsgemäßen Ausführungsbeispiel gemäss Figur 3 ist eine Zerkleinerungsvorrichtung R₂ aufgezeigt, bei welcher die Auffangeinrichtung 8, mit der Fördereinrichtung 10 nicht hinter dem Rotorelement 1 angeordnet ist, sondern oberhalb des Rotorelementes 1 vorgesehen ist.

Aus dieser Anordnung reduziert sich ein Winkel α bzw. im Wirkbereich der Zerkleinerung im Zerkleinerungsspalt 5 bzw, es reduziert sich eine Zerkleinerungsstrecke um den Umfang des Rotors 1 in einem etwas kleineren Winkelbereich α von etwa zwischen 20° und 90°.

Es kann für leicht zu zerkleinerndes organisches Material von Vorteil sein, dass ein Austragen und Übergeben von zerkleinertem organischen Material 6 in die Auffangeinrichtung 8 und über die Fördereinrichtung 10 beispielsweise in einem direkten Auffangbehälter erleichtert ist. Ggfs. kann auf die Übergabeeinheit 11 verzichtet werden. Dies soll ebenfalls im Rahmen der vorliegenden Erfindung liegen.

Auch hier ist von Vorteil, dass sich der Rotor 1 in gleicher Drehrichtung Z zur Fahrtrichtung X, am Boden 7 betrachtet, bewegt und das zu zerkleinernde Material 6 aufnimmt, dem Zerkleinerungsspalt 5 zwischen Gehäuse 3 zuführt, über die Gegenschneiden 4 zerkleinert und der Auffangeinrichtung 8 übermittelt. Dies soll ebenfalls im Rahmen der vorliegenden Erfindung liegen.

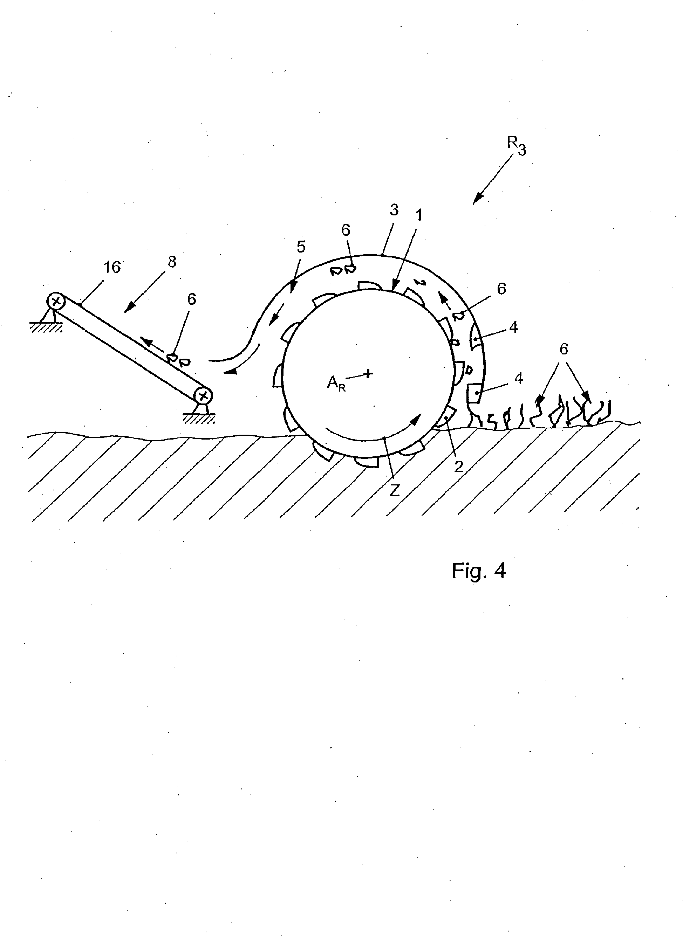

Gemäss Figur 4 weist eine weitere Zerkleinerungsvorrichtung R₃ eine Rotor 1 auf, wie er gemäss Figur 1 in etwa beschrieben ist, der eine Mehrzahl von Zerkleinerungswerkzeugen 2 aufweist, welche mit entsprechenden den Rotor 1 umgebenden Gehäuse 3 eingesetzten Gegenschneiden 4 zusammenwirken. Dabei lässt sich der Rotor 1 entsprechend der dargestellten Drehrichtung Z antreiben um organisches Material 6 zu zerkleinern.

Dabei fliessen in vorbeschriebener Weise an das Gehäuse 3 bzw. an den Rotor 1 eine Auffangeinrichtung 8 direkt an, um zerkleinertes organisches Material 6 direkt auszutragen.

In einem nicht erfindungsgemäßen Ausführungsbeispiel ist im Gehäuse 3 bzw. dem Rotor 1 als eigenständige Einheit einer Zerkleinerungsvorrichtung R₃ die Auffangeinrichtung 8 als Fördereinrichtung 16, insbesondere als Förderband ausgebildet. Dabei ist die Fördereinrichtung 16 fester Bestandteil der Zerkleinerungsvorrichtung R₃. Für diese lässt sich das zerkleinerte organische Material 6 austragen und einem liegenden Fahrzeugaufnahmebehälter od. dgl. zuführen.

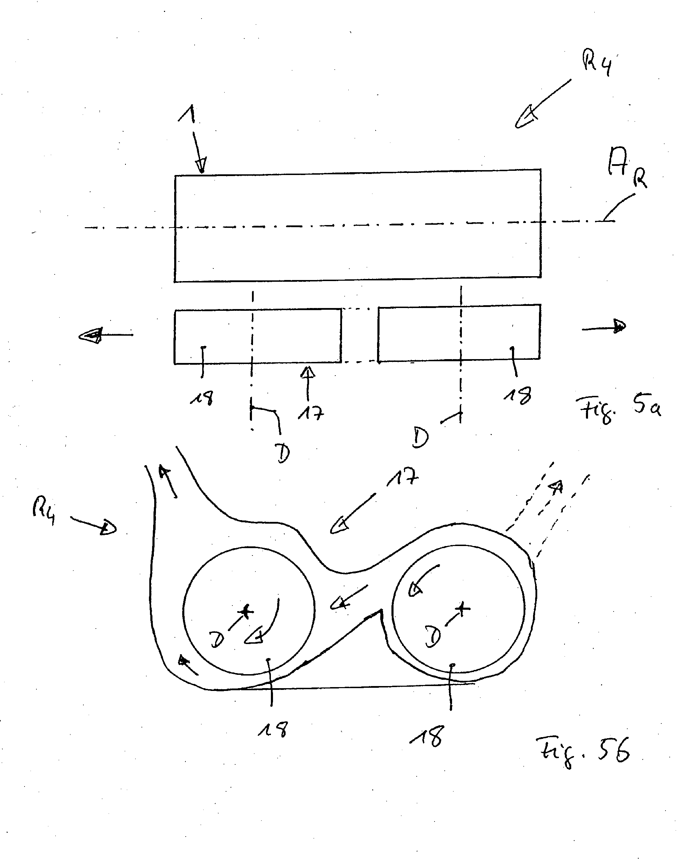

Im erfindungsgemäßen Ausführungsbeispiel gemäss Figur 5a ist eine Zerkleinerungsvorrichtung R₄ aufgezeigt, bei welcher unmittelbar an den Rotor 1, wie es schematisch dargestellt ist, eine Querfördereinrichtung 17 anschliesst.

Die Querfördereinrichtung 17 kann aus beispielsweise zwei nebeneinander angeordneten Schaufelrädern 18 gebildet sein, die in einem gemeinsamen Gehäuse, wie es insbesondere auch in Figur 5b dargestellt ist, untergebracht sind.

Die Besonderheit der Querfördereinrichtung 17 liegt darin, dass die Drehachsen D der Schaufelräder 18 in etwa lotrecht zur Rotorachse A_{R} verlaufen.

Dabei sind die jeweils einzelnen benachbarten Schaufelräder 18der Querfördereinrichtung 17 einzeln oder gemeinsam antreibbar.

Diese befördern zerkleinertes Gut seitlich, wie es in Pfeilrichtung in Figur 5a dargestellt ist, entweder auf die eine und/oder auf die andere Seite heraus, je nach Drehrichtung der Schaufelräder 18 der Querfördereinrichtung 17.

Dort kann das zerkleinerte organische Material einer weiteren Übergabe, Transportband, Übergabeeinheit, Fahrzeug etc. leicht übergeben werden.

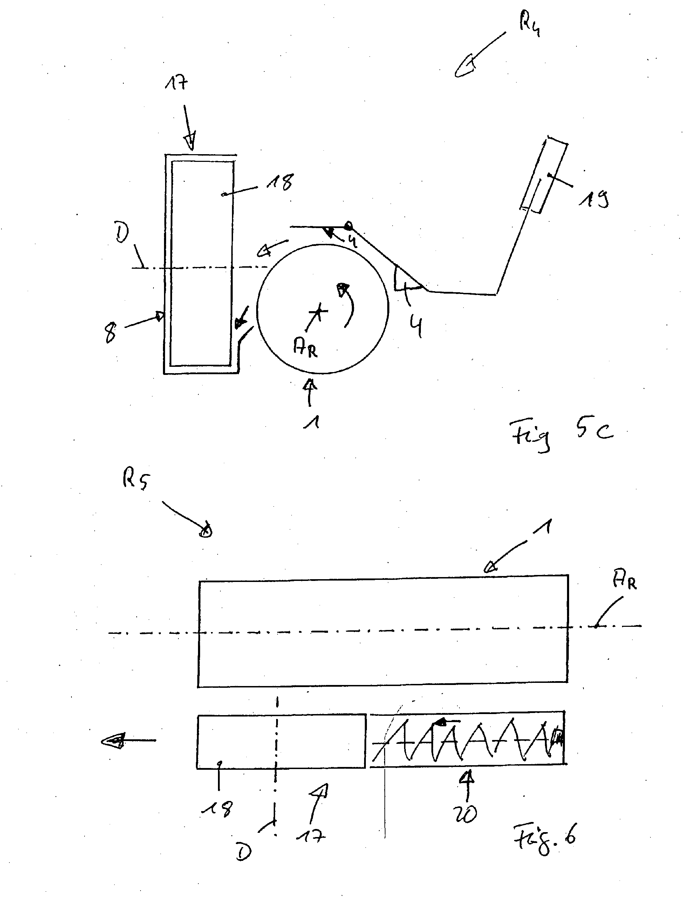

Aus Figur 5c ist ersichtlich, dass an den Rotor 1 in Axialrichtung die Querfördereinrichtung 17 anschliesst und das mittels den Gegenschneiden 4 zerkleinerte Material direkt in eine Auffangeinrichtung 8 der Querfördereinrichtung 17 gelangt und von dort seitlich nach der einen und/oder nach der anderen Seite austragbar ist.

Die Gegenschneiden 4 lassen sich, ggf. gelenkig lagern und sind über eine entsprechende hier nicht näher dargestellte Drückervorrichtung 19 gegen den Rotor 1 zur Veränderung der Grösse der zu zerkleinernden Stoffe und organischen Materialien bewegbar.

Im Ausführungsbeispiel der vorliegenden Erfindung gemäss Figur 6 ist eine Zerkleinerungsvorrichtung R₅ angedeutet, bei welcher an eine Querfördereinrichtung 17 mit Schaufelrad 18 ein Querförderer 20 vorgeschaltet ist, der das organisch zerkleinerte Material des Rotors 1 dann dem Schaufelrad 18 zum seitlichen Austragen übergibt. Als Querförderer 20 können beispielsweise Förderschnecken, Bänder etc. vorgesehen sein, um bei sehr breit ausgebildeten Rotoren 1 nur ein einzelnes Schaufelrad 18 zu verwenden, welches dann das über die verbleibende Länge des Rotors 1 zerkleinerte Material über den Querförderer 20 zum seitlichen Austrag erhält.

Auf diese Weise kann dem Rotor 1 eine Querfördereinrichtung 17 nachgeschaltet werden, die apparativ sehr einfach gestaltet, kostengünstig herzustellen ist und effektiv arbeitet.

Je nach Anordnung von Querförderer 20 und Schaufelrad 18 kann ein Austrag des zerkleinerten Materials zur einen oder anderen Seite seitlich gewährleistet werden.

**Bezugszeichenliste**

| | | | | | |
|---|---|---|---|---|---|
| 1 | Rotor | 34 | | 67 | |
| 2 | Zerkleinerungswerkzeuge | 35 | | 68 | |
| 3 | Gehäuse | 36 | | 69 | |
| 4 | Gegenschneide | 37 | | 70 | |
| 5 | Zerkleinerungsspalt | 38 | | 71 | |
| 6 | organisches Material | 39 | | 72 | |
| 7 | Boden | 40 | | 73 | |
| 8 | Auffangeinrichtung | 41 | | 74 | |
| 9 | Zuführkanal | 42 | | 75 | |
| 10 | Fördereinrichtung | 43 | | 76 | |
| 11 | Übergabeeinheit | 44 | | 77 | |
| 12 | Halteelement | 45 | | 78 | |
| 13 | Rotor | 46 | | 79 | |
| 14 | Klappenelement | 47 | | | |
| 15 | Gelenk | 48 | | | |
| 16 | Fördereinrichtung | 49 | | R₁₋ R₅ | Zerkleinerungsvorrichtung |
| 17 | Querfördereinrichtung | 50 | | | |
| 18 | Schaufelrad | 51 | | | |
| 19 | Drückervorrichtung | 52 | | | |
| 20 | Querförderer | 53 | | | |
| 21 | | 54 | | A_{R} | Rotorachse |
| 22 | | 55 | | X | Fahrtrichtung |
| 23 | | 56 | | Z | Drehrichtung |
| 24 | | 57 | | D | Drehachse |
| 25 | | 58 | | α | Winkel |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Zerkleinerungsvorrichtung mit einem Rotor (1, 13) und zumindest einer Gegenschneide (4) zur Zerkleinerung von organischen Materialien, Böden, pflanzlichen Kulturen oder dergleichen, wobei mittels eines Rotors (1,13) das organische Material zerkleinerbar und einer Auffangeinrichtung (8) zuführbar ist, wobei der Rotor (1), insbesondere als Zerkleinerungsrotor ausgebildet ist, und durch seine Drehrichtung (Z) zur Fahrtrichtung (X) materialaufnehmend angetrieben ist, wobei das Gehäuse (3) das zerkleinerte organische Material (6) in eine Auffangeinrichtung (8) umlenkt bzw. übergibt, welche eine Fördereinrichtung (10, 17) aufweist, die dem kontinuierlichen oder diskontinuierlichen Abtransport von zerkleinertem organischen Material (6) dient, und der Zerkleinerungsrotor (1) und die Auffangeinrichtung (8) mit integrierter Fördereinrichtung (10, 17) in etwa nebeneinander parallel zueinander beanstandet sind, wobei diese über einen gemeinsamen Zuführkanal (9) verbunden sind, **dadurch gekennzeichnet, dass** die Fördereinrichtung (10) an den Rotor als Querfördereinrichtung (17) anschliesst die ein Schaufelrad (18) und einen Querförderer (20) als Förderschnecke oder als zweites Schaufelrad (18) in einer Ebene aufweist, eine Drehachse (D) des Schaufelrades (18) bzw. der Schaufelräder in etwa lotrecht zur Rotorachse (A_{R}) ausgerichtet ist und das Schaufelrad (18) und der Querförderer (20) bzw. das zweite Schaufelrad in einer zur Drehachse (D) senkrechten Ebene angeordnet sind.

2. Zerkleinerungsvorrichtung nach Anspruch 1, **dadurch gekennzeichnet, dass** dem Rotor (1, 15) eine Auffangeinrichtung (8) für das zerkleinerte Material zugeordnet ist, in welcher die Fördereinrichtung (10) als Querfördereinrichtung (17) zum Austragen des zerkleinerten organischen Materials (6) vorgesehen ist.

3. Zerkleinerungsvorrichtung nach Anspruch 1 oder 2, **dadurch gekennzeichnet, dass** der Rotor (1), eine Mehrzahl von Zerkleinerungswerkzeugen (2) aufweist, die mit Gegenschneiden (4) eines umgebenden Gehäuses (3) zusammenwirken.

4. Zerkleinerungsvorrichtung nach wenigstens einem der Ansprüche 1 bis 3, **dadurch gekennzeichnet, dass** der Rotor (1) gleichlaufend einer Fahrtrichtung (X) bzw. Bewegungsrichtung der Zerkleinerungsvorrichtung (R₁, R₂) am Boden (7) betrachtet, angetrieben ist.

5. Zerkleinerungsvorrichtung nach wenigstens einem der Ansprüche 1 bis 4, **dadurch gekennzeichnet, dass** die Auffangeinrichtung (8) unmittelbar dem Rotor (1) entgegen der Fahrtrichtung (X) nachgeschaltet angeordnet ist.

6. Zerkleinerungsvorrichtung nach wenigstens einem der Ansprüche 1 bis 5, **dadurch gekennzeichnet, dass** die Fördereinrichtung (10) das zerkleinerte organische Material (6) stirnseitig einseitig oder beidseitig aus der Auffangeinrichtung (8) heraustransportiert.

7. Zerkleinerungsvorrichtung nach wenigstens einem der Ansprüche 1 bis 6, **dadurch gekennzeichnet, dass** an die Fördereinrichtung (10) eine Übergabeeinheit (11), insbesondere eine Transporteinheit zum kontinuierlichen oder diskontinuierlichen Entnehmen des zerkleinerten organischen Materials (6) anschliesst oder anschliessbar ist.

8. Zerkleinerungsvorrichtung nach Anspruch 7, **dadurch gekennzeichnet, dass** die Übergabeeinheit (11) als Transporteinheit, Transportband, Gebläse od. dgl, ausgebildet ist, die das zerkleinerte organische Material (6) an einen separaten Aufnahmebehälter, Magen, Transportwagen od. dgl. übermittelt.

9. Zerkleinerungsvorrichtung nach wenigstens einem der Ansprüche 1 bis 8, **dadurch gekennzeichnet, dass** durch die entsprechende Anordnung der Fördereinrichtung (10), insbesondere durch die entsprechende Anordnung des Gehäuses (3) um den Rotor (1) eine Zerkleinerungsstrecke mit ggfs. einer Mehrzahl von Gegenschneiden (4), wählbar ist.

10. Zerkleinerungsvorrichtung nach wenigstens einem der Ansprüche 1 bis 9, **dadurch gekennzeichnet, dass** die Auffangeinrichtung (8) zumindest teilweise siebartig ausgebildet ist.

11. Zerkleinerungsvorrichtung nach wenigsten einem der Ansprüche 1 bis 10, **dadurch gekennzeichnet, dass** dem Rotor (1) zur Vorzerkleinerung ein Rotor (13) vorgeschaltet ist, der in einer entgegengesetzten Antriebsrichtung zum Rotor 1 angetrieben bzw. antreibbar ist.

12. Zerkleinerungsvorrichtung nach wenigstens einem der Ansprüche 1 bis 11, **dadurch gekennzeichnet, dass** zwischen Rotor (1) und der Auffangeinrichtung (8) zumindest ein manuell und/oder automatisch betätigbares Klappenelement 15 vorgesehen ist, um zerkleinertes organisches Material (6) direkt wieder dem Boden (7) zuzuführen, wobei das zumindest eine Klappenelement (14) um eine Gelenk (15) verschwenkbar ist.

13. Zerkleinerungsvorrichtung nach wenigstens einem der Ansprüche 1 bis 12, **dadurch gekennzeichnet, dass** über das Schaufelrad (18) und den Querförderer (20) bzw. das zweite Schaufelrad zerkleinertes Material seitlich auf der einen und/oder auf der anderen Seite nahe seitlich neben dem Rotor (1) austragbar ist.

14. Zerkleinerungsvorrichtung nach wenigstens einem der Ansprüche 1 bis 13, **dadurch gekennzeichnet, dass** im Gehäuse (3), insbesondere im Bereich der Gegenschneiden (4) eine Drückervorrichtung (19) zugeordnet ist, welche einen Abstand der Gegenschneiden (4) zur Zerkleinerungswerkzeugen (2) des Rotors (1) veränderbar einstellt.

## Claims

1. Comminution device with a rotor (1, 13) and with at least one counter cutter (4) for the comminution of organic materials, soils, plant cultures or such like, wherein the organic material is comminutable and conveyable to a bin device (8) by means of a rotor (1, 13), wherein the rotor (1) is in particular implemented as a comminution rotor and is driven by its rotary direction with respect to the driving direction such that it takes in material, wherein the housing (3) deflects or feeds the comminuted organic material (6) into a bin device (8) comprising a feeding device (10, 17) that is provided for continually or discontinually transporting away comminuted organic material (6), and wherein the comminution rotor (1) and the bin device (8) with integrated feeding device (10, 17) are spaced apart from each other, approximately parallel next to each other, wherein these are connected via a shared feeding channel (9),
**characterized in that** the feeding device (10) abuts the rotor as a transversal feed device (17) comprising an bucket wheel (18) and a transversal feeder (20) as a screw conveyor or as a second bucket wheel (18) in a plane, and that a rotary axis (D) of the bucket wheel(s) (18) is oriented approximately perpendicularly to the rotor axle (A_{R}) and that the bucket wheel (18) and the transversal feeder (20) respectively the second bucket wheel are arranged in a plane perpendicular to the rotary axis (D).

2. Comminution device according to claim 1, **characterized in that** a bin device (8) for the comminuted material is allocated to the rotor (1), in which bin device (8) the feeding device (10) is provided as a transversal feeding device (17) for discharging the comminuted organic material (6)

3. Comminution device according to claim 1 or 2, **characterized in that** the rotor (1) comprises a plurality of comminution tools (2) that work together with counter blades (4) of a surrounding housing (3).

4. Comminution device according to at least one of claims 1 to 3, **characterized in that** the rotor (1) is driven such that it is synchronised with a driving direction (X) respectively movement direction of the comminution device (R1, R2), viewed on the ground (7).

5. Comminution device according to at least one of claims 1 to 4, **characterized in that** the bin device (8) is arranged such that it is connected directly following the rotor (1) counter to the driving direction (X).

6. Comminution device according to at least one of claims 1 to 5, **characterized in that** the feeding device (10) transports the comminuted organic material (6) out of the bin device (8) frontally on one side or on both sides.

7. Comminution device according to at least one of claims 1 to 6, **characterized in that** a delivery unit (11), in particular a transport unit, abuts or is connectable to the feeding device (10), to the purpose of continually or discontinually retrieving the comminuted organic material (6).

8. Comminution device according to claim 7, **characterized in that** the delivery unit (11) is embodied as a transport unit, a transport belt, a blower or such like, transmitting the comminuted organic material (6) to a separate receiving container, wagon, transport wagon or such like.

9. Comminution device according to at least one of claims 1 to 8, **characterized in that** by an arrangement of the feeding device (10), in particular by an arrangement of the housing (3) around the rotor (1), a comminution line is selectable, if applicable with a plurality of counter cutters (4).

10. Comminution device according to at least one of claims 1 to 9, **characterized in that** the bin device (8) is at least partially embodied sieve-like.

11. Comminution device according to at least one of claims 1 to 10, **characterized in that** for comminution in advance a rotor (13) is connected before the rotor (1), which rotor (13) is driven respectively driveable in a drive direction counter to the rotor (1).

12. Comminution device according to at least one of claims 1 to 11, **characterized in that** between rotor (1) and the bin device (8) at least one manually and/or automatically actuable flap element (15) is provided to directly re-convey comminuted organic material (6) to the ground, the at least one flap element (14) being pivotable about an articulation (15).

13. Comminution device according to at least one of claims 1 to 12, **characterized in that** via the bucket wheel (18) and the transversal feeder (20) respectively the second bucket wheel comminuted material is dischargeable laterally on the one side and/or laterally closely next to the rotor (1) on the other side.

14. Comminution device according to at least one of claims 1 to 13, **characterized in that** in the housing (3), in particular in the region of the counter cutters (4), a pusher device (19) is allocated which modifiably adjusts a distance of the counter cutters (4) to comminution tools (2) of the rotor (1).

## Revendications

1. Dispositif de broyage comprenant un rotor (1, 13) et au moins une lame antagoniste (4) pour broyer des matières organiques, des seuils, des cultures des plantes, ou d'autres choses semblables,
la matière organique étant broyable par le biais d'un rotor (1, 13) et alimentable à un dispositif de rattrapement (8),
le rotor (1) étant implémenté en particulier comme un rotor de broyage et étant entraîné, dû à sa direction rotative (Z) relativement au sens de la marche (X), ainsi qu'il reçoit de matière,
le boîtier (3) détournant ou remettant la matière organique (6) broyée dans un dispositif de rattrapement (8), laquelle comprend un dispositif d'alimentation (10, 17) servant à emporter continûment ou discontinûment de la matière organique (6) broyée, et le rotor (1) de broyage et le dispositif de rattrapement (8) avec dispositif d'alimentation (10, 17) intégré étant à distance l'un de l'autre approximativement en parallel l'un à coté de l'autre et étant connectés par le biais d'un canal d'alimentation (9) partagé,
**caractérisé en ce que** le dispositif d'alimentation (10) se joint au rotor comme dispositif d'alimentation transversale (17) comprenant une roue à aubes (18) et un alimenteur transversal (20) comme transporteur à vis ou comme deuxième roue à aubes (18) dans un plan, qu' un axe rotatif (D) de la roue à aubes (18) ou des roues à aubes (18) est orienté approximativement perpendiculairement à l'axe du rotor (A_{R}) et que la roue à aubes (18) et l'alimenteur transversal (20) respectivement la deuxième roue à aubes sont disposés dans un plan laquelle est perpendiculaire à l'axe rotatif (D).

2. Dispositif de broyage selon la revendication 1,
**caractérisé en ce qu'**un dispositif de rattrapement (8) pour la matière broyée est assigné au rotor (1, 15), dans laquelle le dispositif d'alimentation (10) est prévu comme dispositif d'alimentation transversale (17) pour décharger la matière organique (6) broyée.

3. Dispositif de broyage selon l'une quelconque des revendications 1 ou 2, **caractérisé en ce que** le rotor (1) comprend une pluralité des outils de broyage (2) coopérants avec des lames complémentaires (4) d'un boîtier (3) entourant.

4. Dispositif de broyage selon au moins une des revendications 1 à 3, **caractérisé en ce que** le rotor (1) est entraîné synchronisé à un sens de la marche (X) ou à une direction de mouvement du dispositif de broyage (R₁, R₂) vue au sol (7).

5. Dispositif de broyage selon au moins une des revendications 1 à 4, **caractérisé en ce que** le dispositif de rattrapement (8) est disposé ainsi qu'il est connecté en aval du rotor (1) dans le sens contraire de la marche (X).

6. Dispositif de broyage selon au moins une des revendications 1 à 5, **caractérisé en ce que** le dispositif d'alimentation (10) transporte la matière organique (6) broyée au dehors du dispositif de rattrapement (8) sur le front, d'un côté ou de deux côtes.

7. Dispositif de broyage selon au moins une des revendications 1 à 6, **caractérisé en ce qu'** à l'unité d'alimentation (10) se joint ou est connectable une unité de transfert (11), notamment une unité de transport, pour le prélèvement continu ou discontinu de la matière organique (6) broyée.

8. Dispositif de broyage selon la revendication 7, **caractérisé en ce que** l'unité de transfert (11) est implémentée comme unité de transport, bande de transport, souffleur ou quelque chose de ce type, laquelle transfère la matière organique (6) broyée à un réservoir de réception séparé, un chariot ou chariot de transport séparé ou quelque chose de ce type.

9. Dispositif de broyage selon au moins une des revendications 1 à 8, **caractérisé en ce que**, par l'arrangement du dispositif d'alimentation (10), notamment par l'arrangement du boîtier (3) autour du rotor (1), une voie de broyage est sélectable avec éventuellement une pluralité des lames complémentaires (4).

10. Dispositif de broyage selon au moins une des revendications 1 à 9, **caractérisé en ce que** le dispositif de rattrapement (8) est implémenté au moins partiellement de type d'un tamis.

11. Dispositif de broyage selon au moins une des revendications 1 à 10, **caractérisé en ce qu'**au rotor (1), pour un broyage d'avance, un rotor (13) est connecté en amont, lequel est entraîné réspectivement entraînable dans une direction au contraire du rotor (1).

12. Dispositif de broyage selon au moins une des revendications 1 à 11, **caractérisé en ce qu'**entre le rotor (1) et le dispositif de rattrapement (8) est prévu au moins un élément de clapet (15), actuable manuellement et/ou automatiquement, à le fin de re-conduire de la matière organique (6) broyée directement au sol (7), l'au moins un élément de clapet (14) étant pivotable autour d'une articulation (15).

13. Dispositif de broyage selon au moins une des revendications 1 à 12, **caractérisé en ce que** via la roue à aubes (18) et le transporteur transversal (20) réspectivement la deuxième roue à aubes de la matière organique broyée est déchargeable latéralement à l'un côté et/ou à l'autre coté prochainement latéralement auprès du rotor (1).

14. Dispositif de broyage selon au moins une des revendications 1 à 13, **caractérisé en ce que** dans le boîtier (3), notamment dans la région des lames complémentaires (4), un dispositif de poussoir (19) est assigné, lequel ajuste modifiablement une distance des lames complémentaires (4) aux outils de broyage (2) du rotor (1).
